# EUROPÄISCHE PATENTSCHRIFT

(11) **EP 2 164 762 B1**
(45) Veröffentlichungstag und Bekanntmachung des Hinweises auf die Patenterteilung: **09.02.2011**
(21) Anmeldenummer: 08756843.2
(22) Anmeldetag: 26.06.2008
(51) Int. Cl.: B65D 19/00

(54) **PLATTENARTIGES ELEMENT ZUM ABSTÜTZEN BZW. TRAGEN EINES GEGENSTANDS SOWIE VERFAHREN ZUR HERSTELLUNG DESSELBEN**
PLATE-LIKE ELEMENT FOR SUPPORTING OR BEARING AN OBJECT, AND METHOD FOR PRODUCTION OF THE SAME
ÉLÉMENT EN PLAQUE DESTINÉ À SOUTENIR OU PORTER UN OBJET ET PROCÉDÉ POUR SA FABRICATION

(30) Priorität: 10.07.2007 AT 10672007
(43) Veröffentlichungstag der Anmeldung: 24.03.2010
(73) Patentinhaber: Hirsch Maschinenbau GmbH, 9555 Glanegg (AT)
(72) Erfinder: SCHIAVA, Martin, 9361 St. Salvator (AT); FRANCE, John, Richard, Hollywell, QLD 4216 (AU); KLATZER, Martin, 9062 Moosburg (AT); LUBITSCH, Klaus, 9300 St. Veit/Glan (AT)
(74) Vertreter: Miksovsky, Alexander
(86) Internationale Anmeldenummer: PCT/AT2008/000234
(87) Internationale Veröffentlichungsnummer: WO 2009/006654

(56) Entgegenhaltungen:
- EP-A- 1 500 599
- US-A1- 2005 263 044

## Beschreibung

Die vorliegende Erfindung bezieht sich auf ein plattenartiges Element zum Abstützen bzw. Tragen eines Gegenstands mit einem Kern in einer allgemein rechteckigen Form aus einem geschäumten Kunststoff, wobei der Kern mit einer Kunststoffolie aus einem schlagfesten Material zumindest an beiden Oberflächen insbesondere vollflächig abgedeckt ist, wobei eine Verbindung der den Kern an beiden Oberflächen abdeckenden Kunststoffolien im Bereich einer umlaufenden Seitenkante des Kerns zwischen einer Oberfläche des Kerns und einem daran anschließenden, umlaufenden Rand des Kerns ausgebildet ist. Die Erfindung bezieht sich weiters auf ein Verfahren zur Herstellung eines plattenartigen Elements zum Abstützen bzw. Tragen eines Gegenstands mit einem Kern in einer allgemein rechteckigen Form aus einem geschäumten Kunststoff, wobei der Kern mit einer Kunststoffolie aus einem schlagfesten Material zumindest an beiden Oberflächen insbesondere vollflächig abgedeckt wird, umfassend die Schritte:
- Bereitstellen von zwei erwärmten bzw. erweichten Kunststoffolien, welche die Oberfläche des Kerns abdecken und deren Abmessungen die Abmessungen der Oberfläche des Kerns übersteigen;
- Klemmen bzw. Abdichten der Umfangsränder der Folien außerhalb des Kerns:
- Verbinden der Kunststoffolien im Bereich einer umlaufenden Seitenkante des Kerns zwischen einer Oberfläche des Kerns und einem daran anschließenden, um- laufenden Rand des Kerns;
- gegebenenfalls Entfernen von über die Verbindungsstelle hinausragenden Teilbereichen der Kunststoffolien am Umfang des Kerns.

Ein plattenartiges Element in Form einer Palette sowie ein Verfahren zur Herstellung desselben sind beispielsweise aus der EP-B1500 599 bekannt. Ähnliche Ausführungsformen sind darüber hinaus der US-A 5,401,456 oder der EP-A 0 520 508 zu entnehmen.

Bei diesen bekannten Ausführungsformen wird darauf abgezielt, eine Palette herzustellen, wobei der Kern aus geschäumtem Kunststoff, insbesondere Polystyrol, hergestellt wird, wobei unter Berücksichtigung der bekannten, geringen Festigkeitseigenschaften von geschäumtem Polystyrol zumindest an den Oberflächen jeweils eine Kunststoffolie aus einem schlagfesten Material vorgesehen ist, um die für eine Palette erforderlichen, erhöhten Festigkeitseigenschaften zur Verfügung zu stellen. Bei diesen bekannten Ausführungsformen erfolgt eine Verbindung von an den jeweiligen Oberflächen des plattenartigen Elements vorgesehenen Kunststoffolien allgemein derart, daß eine erste Folie bzw. Tafel in eine erste, auf die Kontur des zu beschichtenden, plattenartigen Elements abgestimmte Form eingebracht wird und eine erste Oberfläche bzw. Seite und mindestens die halbe Kante bzw. den halben Umfangsrand bedeckt, wobei eine zweite Folie bzw. Tafel ebenfalls in eine entsprechende Form eingebracht wird und die andere Oberfläche und ebenfalls den halben Rand bedeckt, so daß auf Höhe der Hälfte des Umfangsrandes des plattenartigen Elements eine Verbindung zwischen diesen Folien vorgenommen wird. Zur Herstellung wird ein mehrstufiges Verfahren vorgeschlagen, wobei insbesondere nachteilig ist, daß eine Positionierung der Tafeln bzw. Folien in den auf die Kontur abgestimmten Formen bis jeweils zum halben Umfangsrand und eine Verbindung an dieser Stelle nur mit großem, zusätzlichem Aufwand möglich ist, so daß die Herstellung überaus kompliziert wird. Darüber hinaus lassen sich üblicherweise die Folien, welche jeweils die Oberfläche des plattenartigen Elements abdecken, nicht derart genau in den Formen justieren sowie positionieren, um gemäß dem bekannten Stand der Technik tatsächlich auf halber Höhe des Umfangsrands bzw. des umlaufenden Rands eine ausreichende und zuverlässige Überdeckung der Folien bzw. Tafeln zu erzielen. Außerdem ist es bei den vorgeschlagenen, bekannten Verfahren normalerweise nicht möglich, bei Überdeckung der beiden Folien in der Mitte des umlaufenden Randes eine Verschweißung der beiden Bedeckungsfolien zu erzielen, was einen Schwachpunkt dieses bekannten Produkts und Verfahrens darstellt. Darüber hinaus ist nachteilig, daß jeweils auf die Kontur des zu beschichtenden, plattenartigen Elements abgestimmte Formen verwendet werden müssen, um eine Anlage der Folien bzw. Tafeln an das plattenartige Element bzw. den Kern desselben zu ermöglichen. Bei Änderungen der Form bzw. Gestalt des zu beschichtenden Elements ist somit auch eine Änderung der zu verwendenden Form bzw. mechanischen Abstützung erforderlich.

Darüber hinaus sind ein plattenartiges Element in Form einer Palette sowie ein Verfahren zur Herstellung der eingangs genannten Art beispielsweise der US 2005/0263044 A1 zu entnehmen.

Die vorliegende Erfindung zielt darauf ab, ein plattenartiges Element der eingangs genannten Art unter Vermeidung der obengenannten Nachteile zur Verfügung zu stellen, um mit einfachen und zuverlässigen Verfahrensschritten ein eine entsprechend hohe Festigkeit und Widerstandsfähigkeit zur Verfügung stellendes, plattenartiges Element bereitzustellen.

Zur Lösung der obigen Aufgaben ist ein plattenartiges Element der eingangs genannten Art im wesentlichen dadurch gekennzeichnet, daß der Kern im Bereich der Seitenkante der Verbindung zwischen den beiden die Oberflächen abdeckenden Kunststoffolien mit einer umlaufenden, abgesetzten Vertiefung ausgebildet ist. Eine derartige umlaufende, abgesetzte Vertiefung stellt eine entsprechende Aufnahmestelle für die Verbindung der Folien zur Verfügung, so daß im wesentlichen unabhängig von der vorzusehenden Verbindung im Bereich der Seitenkante ein bündiges Äußeres des plattenartigen Elements ohne Vorhandensein jeglicher Wölbungen oder Erhebungen, insbesondere im Bereich der Verbindung, zur Verfügung gestellt werden kann. Da eine Verbindung der den Kern an beiden Oberflächen abdeckenden Kunststoffolien, insbesondere Folien aus einem schlagfesten Material, im Bereich einer umlaufenden Seitenkante zwischen einer Oberfläche des Kerns und einem daran anschließenden, umlaufenden Rand bzw. Umfangsrand ausgebildet ist bzw. wird, läßt sich eine zuverlässige Positionierung der Verbindungsstelle in der Vertiefung erzielen, welche auch mit vereinfachtem Aufwand und insbesondere rasch und zuverlässig herstellbar ist. Die für die Abdeckung der Oberflächen sowie des Umfangsrands erforderlichen Folien können in einer entsprechenden Größe zur Verfügung gestellt werden, so daß auch eine zuverlässige Verbindung im Bereich der Seitenkante bzw. der Vertiefung erzielbar ist, welche als ein Schnitt zwischen einer daran anschließenden Oberfläche des Kerns mit allgemein rechteckiger Form und einem im wesentlichen unter einem normalen Winkel daran anschließenden Rand bzw. Umfangsrand definiert ist. Durch Vorsehen der Kunststoffolie aus einem schlagfesten bzw. hochschlagfesten Material insbesondere vollflächig an beiden Oberflächen und an dem daran anschließenden Rand bzw. Umfangsrand bzw. der umlaufenden Seitenfläche ausgehend von einer Oberfläche läßt sich ein plattenartiges Element zur Verfügung zu stellen, welches über seine gesamte Oberfläche bzw. seinen gesamten Umfang auch am Rand vollflächig umschlossen ist. Die Verbindung zwischen den an den jeweiligen Oberflächen vorgesehenen Kunststoffolien kann durch ein Verkleben, Verschweißen oder dgl. durchgeführt werden, wobei darüber hinaus insbesondere auf eine Verwendung von auf die Kontur des zu beschichtenden Kerns des plattenartigen Elements abgestimmten formen verzichtet werden kann, wie dies im Stand der Technik erforderlich war.

Gemäß einer bevorzugten Ausführungsform ist vorgesehen, daß die Kunststoffolien im Bereich ihrer Verbindung wenigstens teilweise überlappend angeordnet und/oder verbunden sind, wobei durch die bevorzugt vorgesehene, wenigstens teilweise Überlappung eine entsprechende Verstärkung im Bereich der Seitenkante im Bereich der Verbindung der zwei Kunststoffolien erzielbar ist. Hiebei kann beispielsweise vorgesehen sein, daß eine Folie in sich zurückgefaltet wird und durch die zweite Folie überdeckt wird, wobei beide Folien in weiterer Folge miteinander verschweißt werden, so daß sich ein starker bzw. widerstandsfähiger Rand ergibt. Eine zuverlässige Aufnahme der Verbindungsstellen der die Oberflächen und den Umfangsrand abdeckenden Folien, welche bei Vorsehen einer wenigstens teilweisen Überlappung zur Erzielung einer ausreichend festen Verbindung einen gegebenenfalls größeren Querschnitt aufweisen, gelingt in einfacher Weise in der erfindungsgemäß vorgeschlagenen Vertiefung.

Es läßt sich somit erfindungsgemäß unter Einsatz eines üblicherweise ein geringes Gewicht aufweisenden Kerns aus geschäumtem Kunststoff, welcher üblicherweise eine vergleichsweise geringe Festigkeit aufweist, durch das Vorsehen der Kunststoffolien aus einem schlagfesten bzw. hochschlagfesten Material ein entsprechend widerstandsfähiges, plattenartiges Element zum Abstützen bzw. Tragen eines Gegenstands zur Verfügung stellen, wobei durch die bevorzugt verstärkt und überlappend ausgebildete Verbindungsstelle auch im Bereich der Verbindung eine entsprechend hohe Tragfestigkeit bzw. Festigkeit zur Verfügung gestellt werden kann.

Gemäß einer weiters bevorzugten Ausführungsform wird vorgeschlagen, daß der Kern aus geschäumtem Polystyrol, EPE, EPP und/oder Legierungen bzw. Copolymeren davon ausgebildet ist, so daß ein entsprechend leichtgewichtiges, plattenartiges Element zur Verfügung gestellt werden kann.

Zur Erzielung der erforderlichen Festigkeit bzw. Widerstandsfähigkeit wird darüber hinaus vorgeschlagen, daß die Folie aus Polystyrol, Polyethylen und/oder Mischungen von Polystyrol und Polyethylen gebildet ist, wie dies einer weiters bevorzugten Ausführungsform des erfindungsgemäßen, plattenartigen Elements entspricht. In diesem Zusammenhang wird gemäß einer weiters bevorzugten Ausführungsform vorgeschlagen, daß eine Mischung von Polystyrol und Polyethylen für die Folie maximal 30 % Polyethylen enthält. Eine andere bevorzugte Ausführungsform wird vorgeschlagen, bei der eine Folie aus Copolymer, basierend auf Styrol und Butadien, besteht.

Zur Erzielung eines entsprechenden Verbunds zwischen dem Kern und den Folien sowie zur Möglichkeit einer Ummantelung des Kerns bei entsprechenden Temperaturen, ohne den Aufbau des Kerns zu beeinträchtigen, wird gemäß einer weiters bevorzugten Ausführungsform vorgeschlagen, daß die Folie eine Glasübergangstemperatur von 100 bis 160 °C aufweist.

Zur Erzielung gewünschter Material- und Festigkeitseigenschaften ist darüber hinaus vorgesehen, daß die Folie eine mehrlagige, insbesondere koextrudierte Folie aus Polystyrol und/oder verschiedenen Polystyrol-Legierungen, beispielsweise mit Butadien oder Polyethylen, ist, wie dies einer weiters bevorzugten Ausführungsform des erfindungsgemäßen, plattenartigen Elements entspricht.

Zur Erzielung entsprechender Widerstands- bzw. Festigkeitseigenschaften wird darüber hinaus vorgeschlagen, daß die Folie eine Dicke von 0,3 bis 4 mm, insbesondere 1 bis 2,5 mm, aufweist, wie dies einer weiters bevorzugten Ausführungsform des erfindungsgemäßen, plattenartigen Elements entspricht. Durch entsprechende Wahl sowohl des Materials als auch der Dicke der Folie lassen sich gewünschte Widerstandseigenschaften des plattenartigen Elements, beispielsweise in Abhängigkeit von dem aufzunehmenden bzw. abzustützenden Gewicht wenigstens eines aufzunehmenden Gegenstands, entsprechend einstellen.

Gemäß einer weiters bevorzugten Ausführungsform wird darüber hinaus vorgeschlagen, daß sowohl der Kern als auch die Folie aus Polystyrol hergestellt sind. Durch eine Bereitstellung eines derartigen sortenreinen, plattenartigen Elements kann entsprechend zunehmend restriktiveren Entsorgungs- oder Recyclingmöglichkeiten Rechnung getragen werden, da gemäß den einschlägigen Vorschriften aus einem einzigen Material hergestellte Kunststoffelemente, welchen eine entsprechende Kennzeichnung verliehen wird, einem üblicherweise kostengünstigeren Recyclingverfahren unterzogen werden können bzw. gegebenenfalls vorgeschriebene Abgaben im Zusammenhang mit der Herstellung und/oder dem Vertrieb bzw. Einsatz derartiger Kunststoffelemente bei Vorliegen von sortenreinen Elementen entsprechend niedriger sind.

Wie oben bereits angedeutet, läßt sich das plattenartige Element gemäß der vorliegenden Erfindung entsprechend widerstandsfähig zur Verfügung stellen, wobei gemäß einer bevorzugten Ausführungsform vorgeschlagen wird, daß das plattenartige Element eine Festigkeit zur Belassung mit einer dynamischen Last von wenigstens 1000 kg aufweist. Derartige Bruchfestigkeiten erlauben die Herstellung von entsprechend widerstandsfähigen, plattenartigen Elementen zur Abstützung bzw. Aufnahme wenigstens eines Gegenstands beispielsweise für Transportzwecke. Eine Überprüfung der Belastung erfolgt beispielsweise gemäß der Norm EN ISO 8611-1 unter Einhaltung von darin enthaltenen, zu prüfenden Festigkeitswerten. Hiebei ist die dynamische, maximale Belastbarkeit üblicherweise 50 % der gemessenen, dynamischen Bruchlast, so daß bei einer dynamischen Belastbarkeit von 1000 kg eine dynamische Bruchlast von 2000 kg erreicht wird bzw. werden muß.

Wie oben bereits angedeutet, kann ein plattenartiges Element zur Abstützung bzw. Aufnahme wenigstens eines Gegenstands bei geringem Gewicht zur Verfügung gestellt werden, wobei in diesem Zusammenhang erfindungsgemäß bevorzugt vorgeschlagen wird, daß das plattenartige Element eine Dichte von 12 g/l bis 90 g/l, insbesondere 25 g/l bis 70 g/l, aufweist. Ein derartig geringes Gewicht ermöglicht die Bereitstellung von gegebenenfalls größere Abmessungen aufweisenden, plattenartigen Elementen, ohne das Gesamtgewicht entsprechend übermäßig zu erhöhen.

Gemäß einer weiters bevorzugten Ausführungsform wird darüber hinaus erfindungsgemäß vorgeschlagen, daß das plattenartige Element an einer Oberfläche eine Mehrzahl von vorragenden Abstützelementen, insbesondere Füßen, aufweist, so daß durch Vorsehen von derartigen Abstützelementen bzw. Füßen ein palettenartiges, plattenartiges Element erfindungsgemäß zur Verfügung gestellt werden können. Durch die Möglichkeit einer Bereitstellung eines ein entsprechend geringes Gewicht aufweisenden, plattenartigen Elements in Form einer Palette können beispielsweise derzeit eingesetzte Paletten aus Holz ersetzt werden, wobei die erfindungsgemäße Palette bzw. das erfindungsgemäße, plattenartige Element bei gleichen Festigkeitseigenschaften ein verringertes Gewicht ermöglicht.

Für eine ordnungsgemäße Abstützung eines gegebenenfalls ein größeres Gewicht aufweisenden Gegenstands ist darüber hinaus vorgesehen, daß eine Mehrzahl von Füßen im wesentlichen parallel zueinander angeordnet ist, wie dies einer weiters bevorzugten Ausführungsform des erfindungsgemäßen, plattenartigen Elements entspricht.

Für eine gleichmäßige Abstützung über eine gegebenenfalls größere Abmessungen aufweisende Oberfläche des plattenartigen Elements wird darüber hinaus bevorzugt vorgeschlagen, daß sich eine Mehrzahl von Füßen im wesentlichen über eine gesamte Abmessung und im wesentlichen jeweils parallel zu einem Rand der Oberfläche erstreckt.

Bei herkömmlichen Paletten ist bekannt, daß diese im wesentlichen auch an ihrer von der Aufnahmefläche für einen zu transportierenden bzw. aufzunehmenden Gegenstand abgewandten Oberfläche mit einer definierten Auflagefläche trotz der Mehrzahl von Abstützelementen bzw. Füßen versehen sind, wobei derartige Auflageflächen für ein zuverlässiges Positionieren eines derartigen, plattenartigen Elements bzw. einer Palette auf einer Unterlage, welche gegebenenfalls in unterschiedlichen Höhen von jeweils flächigen Elementen gebildet ist, erforderlich sind.

Für eine Anordnung eines erfindungsgemäßen, plattenartigen Elements, insbesondere in Form einer Palette, wird gemäß einer bevorzugten Ausführungsform vorgeschlagen, daß die Füße an ihren von mit der Oberfläche verbundenen, abgewandten Oberflächen mit ausgenommenen bzw. vertieften Bereichen ausgebildet sind. Durch derartige ausgenommene bzw. vertiefte Bereiche kann beispielsweise eine Anordnung eines derartigen plattenartigen Elements mit einem darauf angeordneten Gegenstand auf Regalen vorgenommen werden, welche im Gegensatz zu bekannten Ausbildungen mit lediglich entsprechend den vertieften bzw. ausgenommenen Bereichen des plattenartige Elements angeordneten Trägem bzw. Balken das Auslangen finden, wobei für eine ordnungsgemäße Ablage eines derartigen plattenartigen Elements somit eine vollflächige Unterlagsfläche nicht mehr erforderlich ist, so daß auch Regalkonstruktionert entsprechend vereinfacht werden können bzw. die Regaffähigkeit eines derartigen er findungsgemäßen, plattenartigen Elements erhöht wird.

Für einen möglichst universellen Einsatzzweck ist darüber hinaus vorgesehen, daß eine Mehrzahl von Füßen in an sich bekannter Weise in zu einander senkrechten Zeilen und Spalten angeordnet ist, wie dies einer weiters bevorzugten Ausführungsform des erfindungsgemäßen, plattenartigen Elements entspricht.

Zur Erzielung der entsprechenden Festigkeit bzw. Widerstandsfähigkeit auch der Abstützelemente bzw. Füße wird darüber hinaus bevorzugt vorgeschlagen, daß die Füße ebenfalls von einer Kunststoffolie abgedeckt bzw. ummantelt sind und daß die Verbindung der mit der den Kern abdeckenden Kunststoffolie im Bereich der Seitenkante vorgesehen ist, welche an der die daran anschließenden Füße aufweisenden Oberfläche liegt.

Für eine zuverlässige Anordnung bzw. Lagerung eines auf dem plattenartigen Element anzuordnenden Gegenstands ist darüber hinaus bevorzugt vorgesehen, daß der Kern an der von den Füßen abgewandten Oberfläche mit wenigstens einer auf den abzustützenden Gegenstand abgestimmten Vertiefung bzw. Ausnehmung ausgebildet ist, so daß durch wenigstens eine derartige Vertiefung bzw. Ausnehmung insbesondere eine gegen ein Verrutschen bzw. Verschieben weitestgehend gesicherte Positionierung des Gegenstands möglich wird.

Gemäß einer weiteren abgewandelten Ausführungsform wird erfindungsgemäß bevorzugt vorgeschlagen, daß der Kern mit Führungsrillen bzw. -ausnehmungen insbesondere zur Aufnahme von Festlegungselementen ausgebildet ist, wobei somit in einfacher Weise und unmittelbar an dem plattenartigen Element festlegbare zusätzliche, beispielsweise band- oder riemenförmige Festlegungselemente zur Sicherung des auf dem plattenartigen Element anzuordnenden bzw. von diesem abzustützenden Gegenstands möglich werden.

Bei Ausbildung einer Palette durch Vorsehen von zusätzlichen Abstützelementen bzw. Füßen kann zur Verstärkung von Teilbereichen darüber hinaus bevorzugt vorgesehen sein, daß die Folie(n) in Teilbereichen mit unterschiedlicher Dicke ausgebildet und/oder mehrlagig ausgebildet ist bzw. sind, wobei beispielsweise Teilbereiche, an welchen Hubelemente oder Gabeln eines Gabelstaplers zum Transport einer derartigen Palette angreifen, gegebenenfalls entsprechend verstärkt ausgebildet werden, um gegebenenfalls erhöhten Kräften in diesem Bereich zu widerstehen.

Zur Lösung der eingangs genannten Aufgaben ist darüber hinaus ein Verfahren der eingangs genannten Art im wesentlichen gekennzeichnet durch:
- Evakuieren des zwischen den Kunststoffolien gebildeten Hohlraums durch Anlegen einer Unterdruckquelle vor einem Verbinden der Kunststoffolien.

Es läßt sich somit insgesamt ein einfaches und zuverlässiges Herstellungsverfahren zur Verfügung stellen, wobei durch ein einfaches erfindungsgemäßen Evakuieren des zwischen den Kunststoffolien gebildeten Hohlraums durch Anlegen einer Unterdruckquelle eine ordnungsgemäße und sichere Anlage der erwärmten bzw. erweichten Kunststoffolien an die Oberfläche des Kerns erzielbar ist. Darüber hinaus läßt sich durch entsprechende Positionierung des Verbindungsbereichs insbesondere im Bereich des Anlegens der wenigstens einen Unterdruckquelle eine zuverlässige Verbindung zwischen den die Oberflächen des Kerns und den daran anschließenden, umlaufenden Rand abdeckenden Kunststoffolien erzielen. Nach einer Fertigstellung bzw. Ausbildung der Verbindung im Bereich der Seitenkanten läßt sich darüber hinaus in einfacher Weise gegebenenfalls darüber hinaus vorragendes bzw. vorstehendes Material der Kunststoffolien im Bereich der Seitenkante entfernen, beispielsweise schneiden oder reißen. Bei insbesondere gleichzeitiger Bereitstellung von zwei erwärmten bzw. erweichten Kunststoffolien kann der Verfahrensablauf zur Herstellung eines erfindungsgemäßen, plattenartigen Elements entsprechend beschleunigt werden. Bei gleichzeitiger Bereitstellung von zwei erwärmten bzw. erweichten Kunststoffolien kann unmittelbar eine Evakuierung des zwischen den Kunststoffolien gebildeten Hohlraums vorgenommen werden, wobei, wie bereits oben erwähnt, auf die zusätzliche Verwendung von auf die Kontur des zu beschichtenden Kerns abgestimmten Formen verzichtet werden kann.

Zur Erzielung einer entsprechend einfachen und zuverlässigen Verfahrensführung und zur Erzielung einer ordnungsgemäßen Verbindung zwischen den Oberflächen des abzudeckenden Kerns und den Folien als auch zur Vermeidung einer Beeinträchtigung des Zustands des Kerns wird darüber hinaus bevorzugt vorgeschlagen, daß eine Erwärmung der Folien auf eine Temperatur zwischen 90 und 190°C, insbesondere 100 °C und 160 °C, vorgenommen wird.

Für eine ordnungsgemäße Anlage der Kunststoffolien an den abzudeckenden Kern des plattenartigen Elements wird darüber hinaus vorgeschlagen, daß ein Differenz- bzw. Unterdruck von 0,5 bis 0,9 bar, insbesondere 0,7 bis 0,8 bar, angelegt wird, wie dies einer weiters bevorzugten Ausführungsform des erfindungsgemäßen Verfahrens entspricht.

Unter Berücksichtigung der vorliegenden, erweichten bzw. erwärmten Folien und des anzulegenden Unterdrucks kann eine Verbindung zwischen den Folien und dem Kern in entsprechend kurzer Zeit erfolgen, wobei gemäß einer weiters bevorzugten Ausführungsform des erfindungsgemäßen Verfahrens vorgeschlagen wird, daß ein Unterdruck während eines Zeitraums von weniger als 25 s, insbesondere 15 s, angelegt wird. Es ist somit ersichtlich, daß mit kurzen Taktzeiten eine Herstellung von eine entsprechende Festigkeit bzw. Widerstandsfähigkeit aufweisenden, plattenartigen Elementen bzw. Paletten erzielbar ist.

Um ein möglichst gleichmäßiges Evakuieren im Bereich der Verbindung bzw. Klemmstelle oder Abdichtstellen zwischen den miteinander zu verbindenden Kunststoffolien im wesentlichen über den gesamten Umfang des zu umhüllenden Kerns des plattenartigen Elements zur Verfügung zu stellen, wird darüber hinaus vorgeschlagen, daß ein Unterdruck über entlang des Umfangs des Kerns zwischen den Folien während des Klemmens bzw. Abdichtens angeordnete, rohr- bzw. schlitzartige, hohle Vorrichtungen angelegt wird, welche zur Ausbildung von teilweise überlappenden Randbereichen im Bereich der Verbindung der Folien unmittelbar vor Beendigung des Evakuierungsschritts zunehmend aus dem Bereich der Verbindung zwischen den zwei Folien entfernt werden, wie dies einer weiters bevorzugten Ausführungsform des erfindungsgemäßen Verfahrens entspricht.

Für den Fall von insbesondere großflächigen Kunststoffolien und gegebenenfalls längeren Zeiträumen für eine Evakuierung wird zur Erzielung einer entsprechend zuverlässigen Anlage der Folien an dem zu ummantelnden bzw. zu bedeckenden Kern während vergleichsweise kurzer Zeiträume darüber hinaus ergänzend vorgeschlagen, daß während des Evakuierens die Folien zusätzlich erwärmt bzw. erhitzt werden, wie dies einer weiters bevorzugten Ausführungsform des erfindungsgemäßen Verfahrens entspricht.

Die Erfindung wird nachfolgend anhand von in der beiliegenden Zeichnung schematisch dargestellten Ausführungsbeispielen näher erläutert. In dieser zeigen:
Fig. 1 eine schematische Schnittansicht durch eine erste Ausführungsform eines erfindungsgemäßen, plattenartigen Elements;
Fig. 2a bis 2d unterschiedliche Stufen eines erfindungsgemäßen Verfahrens zur Herstellung eines erfindungsgemäßen, plattenartigen Elements, wobei das in Fig. 2a bis 2d dargestellte, plattenartige Element mit Abstützelementen bzw. Füßen versehen ist;
Fig. 3 eine vereinfachte, schematische Draufsicht auf ein plattenartiges Element während des Vorgangs einer Anordnung bzw. Verbindung von den Kern des plattenartigen Elements bedeckenden bzw. ummantelnden Kunststoffolien, wobei am Umfang des plattenartigen Elements angeordnete, schlitzartige Vakuumvorrichtungen schematisch angedeutet sind;
Fig. 4 in vergrößertem Maßstab eine Teildarstellung des Bereichs der Anordnung der Vakuumvorrichtung zur Anordnung bzw. Festlegung von jeweils zwei Kunststoffolien während des Evakuierungsvorgangs;
Fig. 5 in einer zu Fig. 4 ähnlichen Darstellung die Anordnung der Kunststoffolien nach Entfernung der Vakuumvorrichtung und somit Fertigstellung der Verbindung der den Kern bedeckenden Kunststoffollen;
Fig. 6a und 6b eine perspektivische Ansicht auf die obere Oberfläche sowie eine Bodenansicht einer abgewandelten Ausführungsform eines erfindungsgemäßen, plattenartigen Elements;
Fig. 7, 8 und 9 Ansichten ähnlich zu Fig. 6b auf einen Bodenbereich von weiteren abgewandelten Ausführungsformen eines erfindungsgemäßen, plattenartigen Elements mit unterschiedlichen Ausbildungen von Abstützelementen bzw. Füßen zur Ausbildung des plattenartigen Elements in Form einer Palette; und
Fig. 10 in einer zu Fig. 2b ähnlichen Darstellung eine abgewandelte Ausführungsform eines erfindungsgemäßen Verfahrens zur Herstellung eines erfindungsgemäßen, plattenartigen Elements.

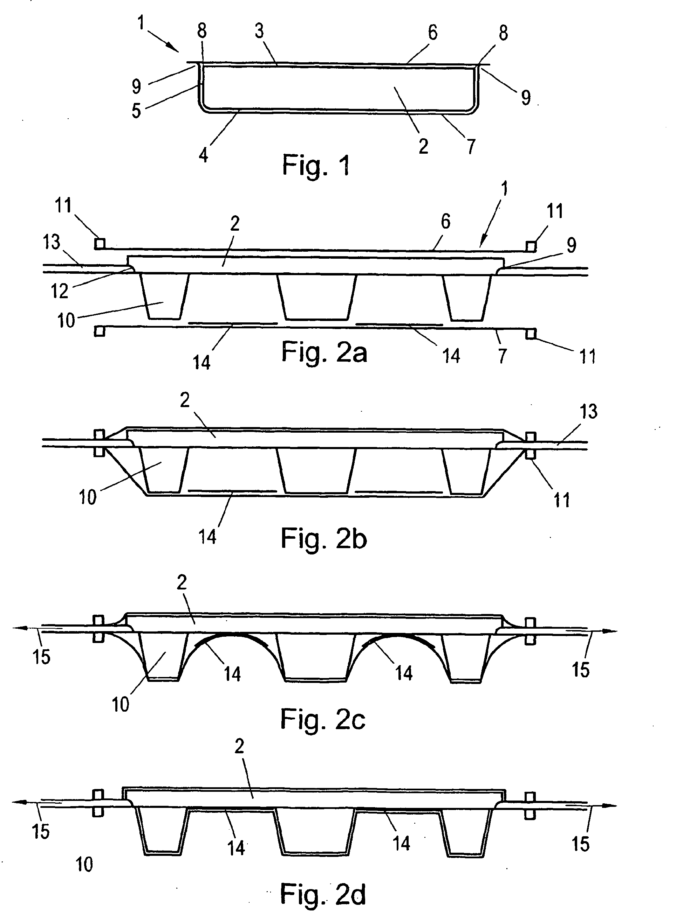

In Fig. 1 ist schematisch mit 1 ein plattenartiges Element bezeichnet, welches aus einem Kern 2 aus geschäumten Kunststoff, beispielsweise Polystyrol, besteht, wobei zur Erzielung einer entsprechenden Festigkeit bzw. Widerstandsfähigkeit der Kern 2 sowohl an seinen Oberflächen 3 und 4 als auch an einem umlaufenden Rand bzw. Umfangsrand bzw. einer umlaufenden Seitenfläche 5 von Kunststoffolien 6 und 7 jeweils insbesondere vollflächig abgedeckt ist, wobei in der schematischen Darstellung von Fig. 1 ersichtlich ist, daß die Kunststoffolien 6, 7 im Bereich einer Kante bzw. Seitenkante 8 zwischen der Oberfläche 6 und dem Umfangsrand bzw. der umlaufenden Seitenfläche 5 bei bzw. an einer mit 9 bezeichneten Verbindung verbunden sind.

Die im Bereich der Seitenkante 8 vorgesehene Verbindung 9 stellt eine zuverlässige Positionierung der Folien 6 und 7 zur Verfügung, wobei durch die Anordnung der Verbindung 9 im Bereich der Seitenkante 8 auch eine zuverlässige Verbindung zwischen den Kunststoffolien 6, 7 für eine vollständige Ummantelung des Kerns 2 erzielbar ist.

In den nachfolgenden Figuren werden trotz teilweise unterschiedlicher Formgebungen für gleiche Elemente die jeweils gleichen Bezugszeichen beibehalten.

Somit ist bei den in Fig. 2a bis 2d dargestellten Verfahrensschritten erkennbar, daß ein wiederum mit 2 bezeichneter Kern mit einer Mehrzahl von Abstützelementen bzw. Füßen versehen ist, welche allgemein mit 10 bezeichnet sind.

Zur Ausbildung der durch die Kunststoffolien 6 und 7 herzustellenden Ummantelung ist in Fig. 2a ersichtlich, daß diese Folien 6 und 7 in den Bereich des zu ummantelnden Kerns 2 sowie der Abstützelemente 10 gebracht werden, wobei an den äußeren Rändern der Kunststoffolien 6 und 7 Klemmstellen 11 angedeutet sind. Darüber hinaus ist im Bereich der Kante 9, welche bei der in Fig. 2a bis 2d dargestellten Ausbildung abgesetzt ist bzw. eine Vertiefung 12 aufweist, ersichtlich ist, daß in diesem Bereich über schlitzartige Elemente 13, auf welche später im Detail eingegangen werden wird, ein Vakuum über eine nicht näher dargestellte Unterdruckquelle angelegt wird.

In Fig. 2a bis 2d ist darüber hinaus angedeutet, daß die Kunststoffolie 7 in Teilbereichen 14 verstärkt ausgebildet ist bzw. eine zusätzliche Lage einer Kunststoffolie aufweist, wobei diese Teilbereiche 14 nach Fertigstellung der Ummantelung durch die Kunststoffolien 6 und 7 verstärkte Bereiche 14 zur Verfügung stellt, welche bei Einsatz des plattenartigen Elements 1 als Palette bei Transport der Palette sowie eines nicht näher dargestellten, darauf anzuordnenden Gegenstands mit Gabelstaplern oder ähnlichen Vorrichtungen gegebenenfalls auftretende, erhöhte Kräfte aufnehmen können.

Für ein Verbinden der Kunststoffolien 6 und 7 mit dem Kern 2 sowie ein Ummanteln der Abstützelemente bzw. Füße 10 werden die Kunststoffolien 6 und 7 über nicht näher dargestellte Heizeinrichtungen erwärmt bzw. erweicht und insbesondere gleichzeitig bereitgestellt, worauf, wie dies in Fig. 2b angedeutet ist, die Klemmstellen 11 im wesentlichen in Anlage aneinander und die Schlitzvorrichtungen 13 umgebend gebracht werden, worauf nach Anlegen eines Unterdrucks bzw. Vakuums entsprechend dem Pfeil 15 in Fig. 2c und 2d der Hohlraum zwischen den Folien 6 und 7, in welchen der zu ummantelnde Kern 2 sowie die daran vorgesehenen Abstützelemente bzw. Füße 10 umschlossen sind, evakuiert wird, so daß durch zunehmendes Anlegen eines Unterdrucks 15 eine Anlage der Folien 6 und 7 an den Kern 2 sowie die Abstützelemente 10 erfolgt. In Fig. 2c ist hiebei eine Zwischenstufe während des Evakuierungsvorgangs angedeutet dargestellt, während in Fig. 2d die fertiggestellte, anliegende Position der Kunststoffolien 6 und 7 am Kern 2 sowie den Abstützelementen bzw. Füßen 10 angedeutet ist.

Aus Fig. 2 ist ersichtlich, daß auf eine Verwendung von an die Kontur des zu beschichtenden Kerns 2 sowie der angedeuteten Füße 10 abgestimmten Formen bzw. mechanischen Abstützungen für eine ordnungsgemäße Anlage der Folien 6 und 7 vollständig verzichtet werden kann, so daß eine Anlage der Folien 6 bzw. 7 an den Kern 2 sowie die Füße 10 lediglich durch Anlegen eines Unterdrucks im Inneren des durch die Folien 6 und 7 definierten Hohlraums, in welchem der Kern 2 aufgenommen ist, vorgenommen wird bzw. erfolgt.

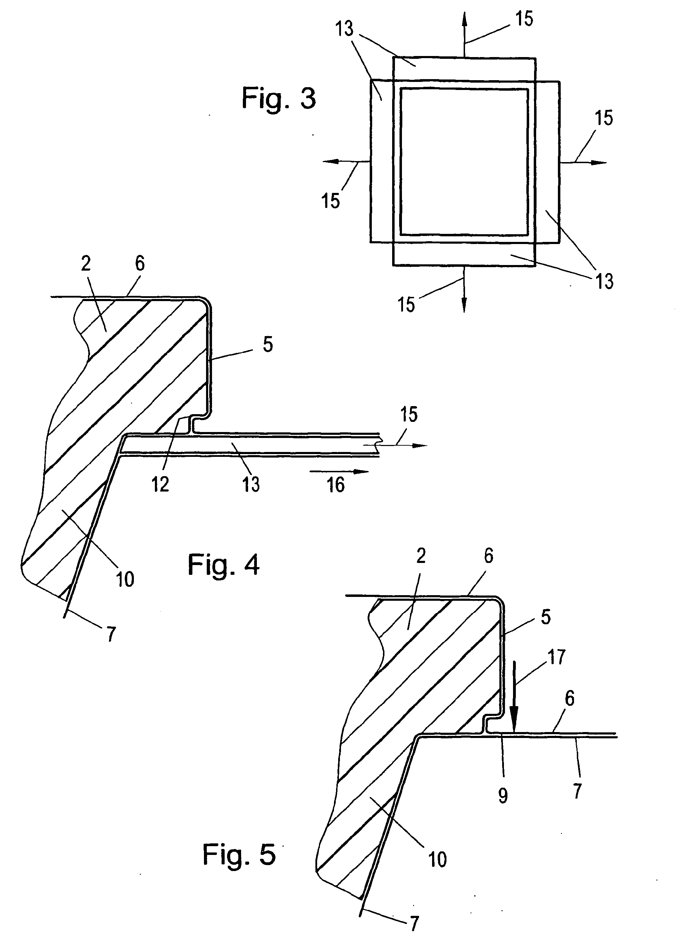

Bei der schematischen Darstellung gemäß Fig. 3 ist ersichtlich, daß im wesentlichen um den gesamten Umfang des Kerns 2 schlitzartige Vorrichtungen 13 angeordnet sind, an welchen wiederum entsprechend dem Pfeil 15 ein Unterdruck bzw. Vakuum angelegt wird. Die Vorrichtung 13 dient hiebei einerseits zur Evakuierung entsprechend dem Pfeil 15 als auch der Abstützung des Kerns 2 während des Beschichtungsvorgangs. Durch eine Evakuierung im wesentlichen über den gesamten Umfang im Bereich des Umfangsrands 5 des Kerns 2 erfolgt somit eine zuverlässige Evakuierung des zwischen den Kunststoffolien 6 und 7 definierten Hohlraums, wobei die in Fig. 2a bis 2d angedeuteten Klemmstellen der Einfachheit bzw. Deutlichkeit halber in Fig. 3 nicht näher gezeigt sind.

In Fig. 4 ist in vergrößertem Maßstab die Positionierung einer Rohr- bzw. Schlitzvorrichtung 13 im Bereich unmittelbar unterhalb des Seitenrands 5 bzw. der Vertiefung 12 im Detail dargestellt, wobei darüber hinaus auch eine Evakuierung entsprechend dem Pfeil 15 angedeutet ist. In Fig. 4 ist hiebei im wesentlichen der in Fig. 2d dargestellte Zustand gezeigt, gemäß welchem sich die Folien 6 und 7 im wesentlichen in Anlage sowohl an den Kern 2 als auch den dargestellten Teilbereich des Abstützelements bzw. Fußes 10 befinden. Zu diesem Zeitpunkt erfolgt ein Zurückziehen des schlitzartigen Elements 13 entsprechend dem Pfeil 16, so daß sich insbesondere die Folie 6 als auch in weiterer Folge die Folie 7 im Bereich der Vertiefung bzw. umlaufenden Ausnehmung 12 im Bereich der Seitenkante am Ende des Umfangsrands 5 teilweise überlappen, wobei in diesem überlappten Zustand eine Verbindung zwischen den Folien erfolgt, wie dies im Detail in Fig. 5 angedeutet ist. Der Bereich der überlappenden Verbindung zwischen den Folien 6 und 7 ist wiederum mit 9 bezeichnet. Nach einer Fertigstellung der Verbindung 9 in diesem überlappenden Bereich erfolgt eine Abtrennung der verbleibenden Reste der Folien 6 und 7, wie dies durch eine Schneidvorrichtung 17 angedeutet ist. In Fig. 5 ist ersichtlich, daß eine Folie 6 in sich zurückgefaltet bzw. umgefaltet wird und daß die zweite Folie 7 überdeckt wird, wobei die beiden Folien 6 und 7 in weiterer Folge miteinander verschweißt werden, so daß sich nach erfolgter Abtrennung der Reste der Folien 6 und 7 ein starker bzw. verstärkter Rand ergibt.

Durch die Anordnung der Verbindungsstelle 9 im Bereich der Kante zwischen dem Umfangsrand 5 und der abzudeckenden Oberfläche des Kerns 2 läßt sich somit eine zuverlässige Verbindung zwischen den Folien 6 und 7 erzielen, so daß auch im Bereich der Verbindung 9 eine ordnungsgemäße Festigkeit sichergestellt wird.

In den nachfolgenden Figuren sind teilweise perspektivische Ansichten von unterschiedlichen, abgewandelten Ausführungsformen von jeweils wiederum mit 1 bezeichneten, plattenartigen Elementen jeweils in Form einer Palette angedeutet.

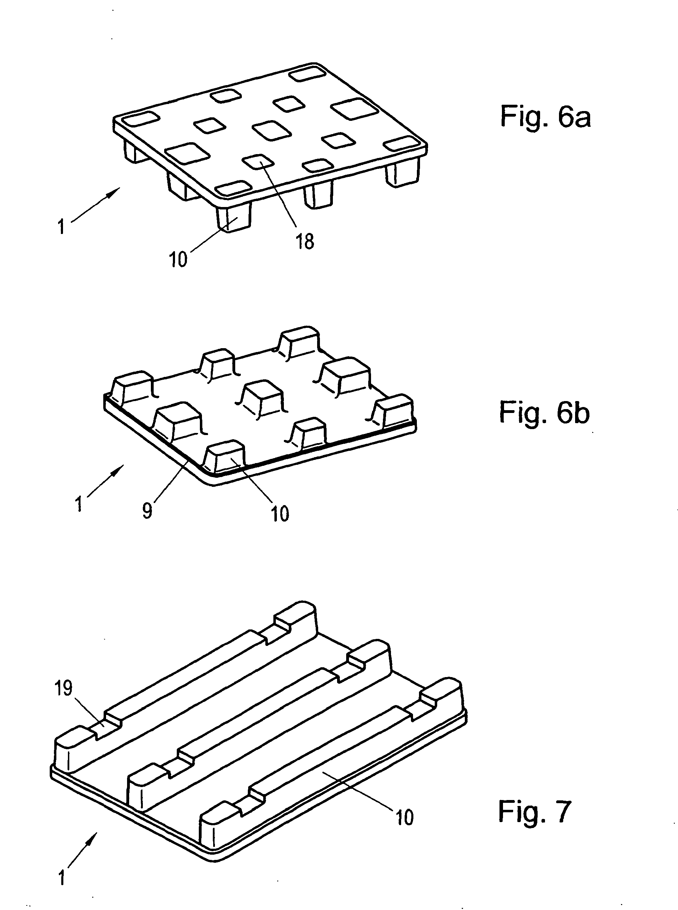

Bei der Ausführungsform gemäß Fig. 6a und 6b ist ersichtlich, daß eine Mehrzahl von wiederum mit 10 bezeichneten Abstützelementen bzw. Füßen in Reihen und Spalten angeordnet ist, so daß ein derartiges plattenartigen Element bzw. eine derartige Palette 1 beispielsweise von einem Hubstapler oder Gabelstapler mit einem nicht näher dargestellten, darauf aufzunehmenden bzw. zu transportierenden Gegenstand gehandhabt werden kann. Bei der Darstellung gemäß Fig. 6a ist darüber hinaus angedeutet, daß an der von den Füßen bzw. Abstützelementen 10 abgewandten Oberfläche das plattenartige Element 1 zusätzliche Vertiefungen bzw. Ausnehmungen 18 aufweist, welche beispielsweise auf entsprechende Festlegungselemente bzw. Füße eines darauf zu lagernden Gegenstands abgestimmt sind, so daß durch eine Anordnung des Gegenstands auf dem plattenartigen Element 1 bzw. der Palette eine Sicherung gegen ein Verrutschen über das zusätzliche Vorsehen von Aufnahmevertiefungen 18 möglich wird.

Bei der in Fig. 7 dargestellten Ausführungsform sind abgewandelte Abstützelemente 10 in Form sich im wesentlichen über eine Abmessung des plattenartigen Elements 1 erstreckenden, durchgehenden Abstützelementen dargestellt, wobei, wie in Fig. 7 ersichtlich, diese Abstützelemente zusätzliche Vertiefungen bzw. Ausnehmungen 19 in Endbereichen aufweisen. Über derartige zusätzliche Vertiefungen bzw. Ausnehmungen 19 kann beispielsweise ein derartiges plattenartigen Element 1 auf einer lediglich entsprechend abgestimmte Träger- bzw. Balkenkonstruktionen aufweisenden Regalkonstruktion gelagert werden, ohne daß die Regalkonstruktion mit im wesentlichen vollflächigen Lager- bzw. Abstellflächen ausgebildet sein muß.

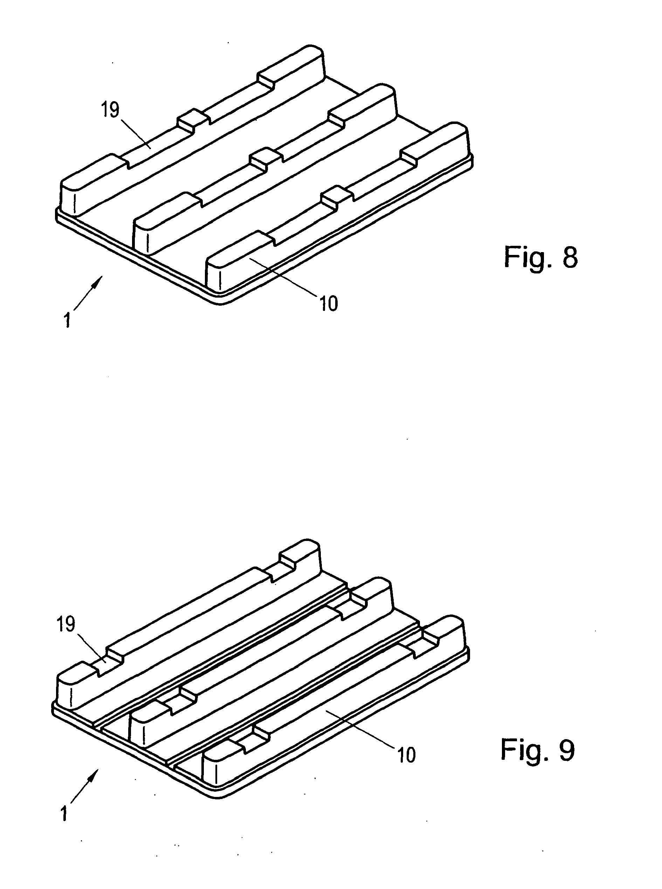

In ähnlicher Weise sind in Fig. 8 und 9 weitere Ausführungsformen eines jeweils von einer Palette gebildeten, plattenartigen Elements 1 dargestellt, wobei wiederum sich im wesentlichen über eine Längserstreckung erstreckende Abstützelemente bzw. Füße 10 vorgesehen sind, welche wiederum in Anpassung an unterschiedliche Auflagekonstruktionen von Regalen zur Erzielung einer entsprechenden Regalfähigkeit mit entsprechenden Vertiefungen bzw. Ausnehmungen 19 versehen sind.

Darüber hinaus ist bei der in Fig. 9 dargestellten Ausführungsform angedeutet, daß zwischen den Abstützelementen bzw. Füßen 10 im Bereich der Oberflächen des Kerns 2 zusätzliche Führungsrillen 20 vorgesehen sind, welche beispielsweise zur Aufnahme von insbesondere gurt- bzw. bandartigen Festlegungseinrichtungen zur Fixierung von auf dem plattenartigen Element festzulegenden Gegenständen einsetzbar sind.

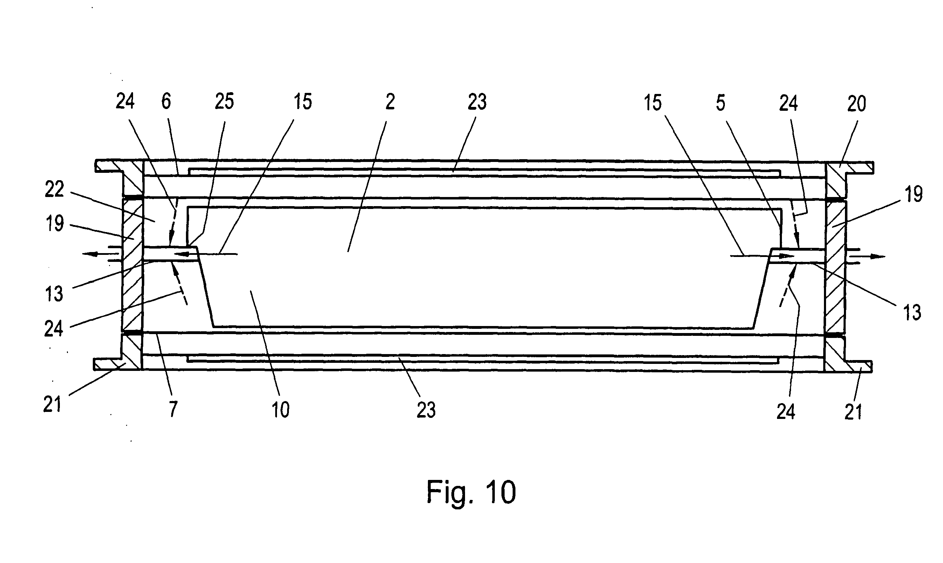

Bei der in Fig. 10 dargestellten, abgewandelten Ausführungsform ist ersichtlich, daß ein wiederum mit 2 bezeichneter Kern über die wiederum mit 13 bezeichneten Vorrichtungen abgestützt wird, wobei die Vorrichtungen 13 schlitz- bzw. rohrförmige Durchtrittsöffnungen zur Erzeugung eines Unterdrucks bzw. Vakuums entsprechend dem Pfeil 15 aufweisen.

Die zur Beschichtung des Kerns 2 vorgesehenen Kunststoffolien 6 und 7 sind bei dieser Ausführungsform in einer entsprechenden Halterung 19 und 20 bzw. 21 gelagert und geklemmt, so daß bei einem Schließen der Halterungselemente 19, 20 und 21 die Folien 6 und 7 an ihren Umfangsbereichen geklemmt und abgedichtet werden. Es wird somit zwischen den Folien 6 und 7 und den Halterungen 19 ein luftdicht abgeschlossener Raum 22 zur Verfügung gestellt, welcher in weiterer Folge entsprechend den Pfeilen 15 über die Vorrichtungen 13, welche rohr- bzw. schlitzförmige Öffnungen aufweisen, evakuiert wird, so daß die Folien 6 und 7, welche über beispielsweise in den Halterungen 20 bzw. 21 integrierte und schematisch mit 23 angedeutete Heizeinrichtungen erwärmt werden, durch Anlegen eines Unterdrucks in Anlage an die Form des Kerns 2 und gegebenenfalls der Füße 10 gebracht werden, wie dies bei der in Fig. 2 dargestellten Ausführungsform beispielsweise in Fig. 2c und 2d dargestellt ist.

Falls erforderlich, können die auch zur Abstützung des Kerns 2 herangezogenen Vorrichtungen 13 gegebenenfalls zusätzliche Durchtrittsöffnungen aufweisen, über welche beispielsweise entsprechend den strichlierten Pfeilen 24 ein zusätzliches Evakuieren des zwischen den Folien 6 und 7 aufgespannten Hohlraums 22 vorgenommen wird. Auch bei der in Fig. 10 dargestellten Ausführungsform erfolgt somit im Bereich der Abstützung an der Kante 25 des Kerns 2 eine Verbindung der Folien 6 und 7, so daß insgesamt der Kern 2 durch die Folien 6 und 7 ummantelt ist bzw. wird.

Ähnlich wie bei der vorangehenden Ausführungsform und wie dies insbesondere in Fig. 4 und 5 dargestellt ist, werden nach einem Anlegen der Folien 6 und 7 an der Außenkontur des zu beschichtenden Kerns 2 die Vorrichtungen 13, welche über die rohr- bzw. schlitzförmigen Öffnungen zur Evakuierung des Innenraums 22 als auch zur Halterung bzw. Positionierung des Kerns 2 zwischen den Folien 6 und 7 dienen, entfernt, so daß durch weiteres Evakuieren eine Verbindung der Folien 6 und 7 im Bereich der Kante 25 erfolgt. Falls erforderlich kann, wie bei den vorangehenden Ausführungsformen ausgeführt, ein Restbereich der Folien 6 und 7 nach einem Verbinden, insbesondere Verschweißen, entfernt werden.

Die in Fig. 10 dargestellte, schematische Seitenansicht eines Kerns 2 kann hiebei eine Seitenansicht des in Fig. 7 bis 9 dargestellten, plattenartigen Elements 1 darstellen, wobei jeweils durchgehende bzw. sich in Längsrichtung erstreckende Füße 10 angedeutet sind.

Zur Erzielung eines ein entsprechend geringes Gewicht aufweisenden, plattenartigen Elements, welches dennoch die erforderliche Steifigkeit bzw. Festigkeit aufweist, wird der Kern des plattenartigen Elements 1 beispielsweise aus geschäumtem Polystyrol, EPE, EPP und/oder Legierungen bzw. Copolymeren davon ausgebildet.

Während ein derartiger Kern 2 aus geschäumtem Kunststoff üblicherweise eine relativ geringe Festigkeit bzw. Widerstandsfähigkeit aufweist, wird durch Vorsehen einer Folie 6, 7 aus einem entsprechend schlagfesten bzw. hochschlagfesten Material, welches während des beispielsweise in Fig. 2 und 3 dargestellten Verbindungsvorgangs damit verbunden wird, eine ausreichende Festigkeit des plattenartigen Elements bzw. der Palette 1 sichergestellt. Abhängig von den erzielbaren Festigkeiten bzw. aufzunehmenden Lasten können beispielsweise Folien 6, 7 mit einer Dicke zwischen 0,3 und 4 mm, insbesondere etwa 1 bis 2,5 mm, eingesetzt werden. Vergleichsweise dünne Folien 6, 7 dienen hiebei beispielsweise bei geringen, aufzunehmenden Lasten vor allem als Schutz gegenüber Verschmutzung, während beispielsweise Folien 6, 7 mit einer Dicke von wenigstens 1 mm eine gewünschte Festigkeit zur Aufnahme entsprechend höherer Lasten bereitstellen können.

Als Folienmaterial können beispielsweise Folien 6, 7 aus hochschlagfestem Polystyrol, Polyethylen und/oder Mischungen von Polystyrol und Polyethylen verwendet werden, wobei zur Erzielung gewünschter Festigkeitseigenschaften beispielsweise mehrlagige, insbesondere koextrudierte Folien aus Polystyrol und Polyethylen zum Einsatz gelangen.

Für den Fall einer Herstellung sowohl des Kerns 2 als auch gegebenenfalls daran anschließender Abstützelemente bzw. Füße 10 als auch der Folien 6 und 7 aus Polystyrol kann ein entsprechend sortenreines, plattenartigen Elements 1 zur Verfügung gestellt werden, so daß eine Wiederverwendbarkeit bzw. Recyclingfähigkeit erhöht ist oder zu entrichtende Abgaben unter Berücksichtigung der Tatsache, daß ein sortenreines und somit einfach recycelfähiges, plattenartiges Element 1 zur Verfügung gestellt werden kann, entsprechend verringert sind.

Bei Ausbildung des plattenartigen Elements 1 als Palette mit an einen Kern 2 anschließenden Abstützelementen bzw. Füßen 10, wie dies in Fig. 2a bis 2d sowie Fig. 6a bis 9 und 10 angedeutet ist, können die Abmessungen des im wesentlichen bzw. allgemein rechteckigen bzw. rechtwinkeligen Kerns 2 zwischen einer minimalen Größe von 400 x 600 x 50 mm und einer maximalen Größe von üblicherweise 1500 x 1500 x 200 mm liegen. Entsprechend den Anforderungen wenigstens eines mit dem plattenartigen Element bzw. der Palette 1 zu transportierenden bzw. abzustützenden Gegenstands können entsprechende Zwischengrößen zur Verfügung gestellt werden.

Insbesondere in Abhängigkeit von den aufzunehmenden Lasten bzw. den zu erwartenden Kräften, beispielsweise während eines Transports, kann das plattenartige Element 1 eine Dichte von insbesondere 25 g/l bis 70 g/l aufweisen, so daß eine entsprechende leichtgewichtige Palette bzw. ein plattenartiges Element 1 mit vergleichsweise geringem Gewicht, beispielsweise im Vergleich mit bekannten Transportabstützungen bzw. Paletten, welche beispielsweise aus Holz hergestellt sind, zur Verfügung gestellt werden kann.

Für die Folien 6, 7 können, wie oben bereits erwähnt, beispielsweise hochschlagzähfestes Polystyrol, ein koextrudiertes Folienmaterial aus einer Oberschicht und Unterschicht, jeweils bestehend aus einem Styrol-Butadien-Copolymer und einem hochschlagfesten Polystyrol, eine Mischung des Styrol-Butadien-Blockcopolymers mit hochschlagfestem Polystyrol und ähnliche Folienzusammensetzungen verwendet werden.

Mit einem derartigen Aufbau eines Kerns 2 aus Polystyrol und derartigen Folien 6, 7 lassen sich Lasten von beispielsweise 1000 bis 1800 kg einer dynamischen Last und 2000 bis 6000 kg einer statischen Last bei einer Größe des Kerns 2 eines plattenartigen Elements 1 von beispielsweise 1200 x 1000 mm aufnehmen.

Bei kleineren Abmessungen des Kerns 2 von beispielsweise etwa 1000 x 750 mm lassen sich statische Lasten bis etwa 3000 kg und dynamische Lasten von etwa 800 bis 1000 kg aufnehmen.

Darüber hinaus lassen sich mit derartigen Materialkombinationen dynamische Bruchlasten von bis zu 3600 kg erzielen.

Für den Fall von gegebenenfalls längere Zeiträume beanspruchenden Evakuierungsverfahren gemäß den in Fig. 2 und 3 dargestellten Verfahrensschritten kann vorgesehen sein, daß auch während des Evakuierungsvorgangs eine zusätzliche Erwärmung bzw. Erhitzung der in Anlage an den Kern 2 und die gegebenenfalls vorhandenen Abstützelemente bzw. Füße 10 zu bringenden Kunststoffolien 6 und 7 vorgesehen ist, wie dies beispielsweise durch die Heineinrichtungen in Fig. 10 angedeutet ist.

## Patentansprüche

1. Plattenartiges Element zum Abstützen bzw. Tragen eines Gegenstands mit einem Kern (2) in einer allgemein rechteckigen Form aus einem geschäumten Kunststoff, wobei der Kern (2) mit einer Kunststoffolie (6, 7) aus einem schlagfesten Material zumindest an beiden Oberflächen (3, 4) insbesondere vollflächig abgedeckt ist, wobei eine Verbindung (9) der den Kern (2) an beiden Oberflächen (3, 4) abdeckenden Kunststoffolien (6, 7) im Bereich einer umlaufenden Seitenkante (8, 25) des Kerns (2) zwischen einer Oberfläche (3, 4) des Kerns (2) und einem daran anschließenden, umlaufenden Rand (5) des Kerns (2) ausgebildet ist, **dadurch gekennzeichnet, daß** der Kern (2) im Bereich der Seitenkante (8, 25) der Verbindung (9) zwischen den beiden die Oberflächen abdeckenden Kunststoffolien (6, 7) mit einer umlaufenden, abgesetzten Vertiefung (12) ausgebildet ist.

2. Plattenartiges Element nach Anspruch 1, **dadurch gekennzeichnet, daß** die Kunststoffolien (6, 7) im Bereich ihrer Verbindung (9) wenigstens teilweise überlappend angeordnet und/oder verbunden sind.

3. Plattenartiges Element nach Anspruch 1 oder 2, **dadurch gekennzeichnet, daß** der Kern (2) aus geschäumtem Polystyrol, EPE, EPP und/oder Legierungen bzw. Copolymeren davon ausgebildet ist.

4. Plattenartiges Element nach Anspruch 1, 2 oder 3, **dadurch gekennzeichnet, daß** die Folie (6, 7) aus Polystyrol, Polyethylen und/oder Mischungen von Polystyrol und Polyethylen gebildet ist.

5. Plattenartiges Element nach Anspruch 4, **dadurch gekennzeichnet, daß** eine Mischung von Polystyrol und Polyethylen für die Folie (6, 7) maximal 30 % Polyethylen enthält.

6. Plattenartiges Element nach Anspruch 4 oder 5, **dadurch gekennzeichnet, daß** die Folie (6, 7) eine Glasübergangstemperatur von 80 bis 160 °C aufweist.

7. Plattenartiges Element nach Anspruch 4, 5 oder 6, **dadurch gekennzeichnet, daß** die Folie (6, 7) eine mehrlagige, insbesondere koextrudierte Folie aus Polystyrol und/oder verschiedenen Polystyrol-Legierungen, beispielsweise mit Butadien oder Polyethylen, ist.

8. Plattenartiges Element nach einem der Ansprüche 1 bis 7, **dadurch gekennzeichnet, daß** die Folie (6, 7) eine Dicke von 0,3 bis 4 mm, insbesondere 1 bis 2,5 mm, aufweist.

9. Plattenartiges Element nach einem der Ansprüche 1 bis 8, **dadurch gekennzeichnet, daß** sowohl der Kern (2) als auch die Folie (6, 7) aus Polystyrol hergestellt sind.

10. Plattenartiges Element nach einem der Ansprüche 1 bis 9, **dadurch gekennzeichnet, daß** das plattenartige Element (1) eine Festigkeit zur Belastung mit einer dynamischen Last von wenigstens 1000 kg aufweist.

11. Plattenartiges Element nach einem der Ansprüche 1 bis 10, **dadurch gekennzeichnet, daß** das plattenartige Element (1) eine Dichte von 12 g/l bis 90 g/l, insbesondere 25 g/l bis 70 g/l, aufweist.

12. Plattenartiges Element nach einem der Ansprüche 1 bis 11, **dadurch gekennzeichnet, daß** das plattenartige Element (1) an einer Oberfläche eine Mehrzahl von vorragenden Abstützelementen (10), insbesondere Füßen, aufweist.

13. Plattenartiges Element nach Anspruch 12, **dadurch gekennzeichnet, daß** eine Mehrzahl von Füßen (10) im wesentlichen parallel zueinander angeordnet ist.

14. Plattenartiges Element nach Anspruch 12 oder 13, **dadurch gekennzeichnet, daß** sich eine Mehrzahl von Füßen (10) im wesentlichen über eine gesamte Abmessung und im wesentlichen jeweils parallel zu einem Rand (5) der Oberfläche (3. 4) erstreckt.

15. Plattenartiges Element nach Anspruch 12, 13 oder 14, **dadurch gekennzeichnet, daß** die Füße (10) an ihren von mit der Oberfläche (4) verbundenen, abgewandten Oberflächen mit ausgenommenen bzw. vertieften Bereichen (19) ausgebildet sind.

16. Plattenartiges Element nach einem der Ansprüche 12 bis 15, **dadurch gekennzeichnet, daß** eine Mehrzahl von Füßen (10) in an sich bekannter Weise in zur einander senkrechten Zeilen und Spalten angeordnet ist.

17. Plattenartiges Element nach einem der Ansprüche 12 bis 16, **dadurch gekennzeichnet, daß** die Füße (10) ebenfalls von einer Kunststoffolie (7) abgedeckt bzw. ummantelt sind und daß die Verbindung der mit der den Kern (2) abdeckenden Kunststoffolie (6) im Bereich der Seitenkante (8, 25) vorgesehen ist, welche an der die daran anschließenden Füße (10) aufweisenden Oberfläche (4) liegt.

18. Plattenartiges Element nach einem der Ansprüche 12 bis 17, **dadurch gekennzeichnet, daß** der Kern (2) an der von den Füßen (10) abgewandten Oberfläche (3) mit wenigstens einer auf den abzustützenden Gegenstand abgestimmten Vertiefung bzw. Ausnehmung (18) ausgebildet ist.

19. Plattenartiges Element nach einem der Ansprüche 1 bis 18, **dadurch gekennzeichnet, daß** der Kern (2) mit Führungsrillen bzw. -ausnehmungen (20) insbesondere zur Aufnahme von Festlegungselementen ausgebildet ist.

20. Plattenartiges Element nach einem der Ansprüche 1 bis 19, **dadurch gekennzeichnet, daß** die Folie(n) (6, 7) in Teilbereichen (14) mit unterschiedlicher Dicke ausgebildet und/oder mehrlagig ausgebildet ist bzw. sind.

21. Verfahren zur Herstellung eines plattenartigen Elements (1) zum Abstützen bzw. Tragen eines Gegenstands mit einem Kern (2) in einer allgemein rechteckigen Form aus einem geschäumten Kunststoff, wobei der Kern (2) mit einer Kunststoffolie (6, 7) aus einem schlagfesten Material zumindest an beiden Oberflächen (3, 4) insbesondere vollflächig abgedeckt wird, umfassend die Schritte:
- Bereitstellen von zwei erwärmten bzw. erweichten Kunststoffolien (6, 7), welche die Oberfläche (3, 4) des Kerns (2) abdecken und deren Abmessungen die Abmessungen der Oberfläche (3, 4) des Kerns (2) übersteigen;
- Klemmen bzw. Abdichten der Umfangsränder der Folien (6, 7) außerhalb des Kerns (2);
- Verbinden der Kunststoffolien (6, 7) im Bereich einer umlaufenden Seitenkante (8, 25) des Kerns zwischen einer Oberfläche (3, 4) des Kerns (2) und einem daran anschließenden, umlaufenden Rand (5) des Kerns;
- gegebenenfalls Entfernen von über die Verbindungsstelle (9) hinausragenden Teilbereichen der Kunststoffolien (6, 7) am Umfang des Kerns,
**gekennzeichnet durch** den zusätzlichen Schritt:
- Evakuieren des zwischen den Kunststoffolien (6, 7) gebildeten, Hohlraums (22) durch Anlegen einer Unterdruckquelle vor einem Verbinden der Kunststoffolien (6,

22. Verfahren nach Anspruch 21, **dadurch gekennzeichnet, daß** eine Erwärmung der Folien (6, 7) auf eine Temperatur zwischen 90 °C und 190 °C, insbesondere 100 und 160 °C, vorgenommen wird.

23. Verfahren nach Anspruch 21 oder 22, **dadurch gekennzeichnet, daß** ein Unterdruck von 0,5 bis 0,9 bar, insbesondere 0,7 bis 0,8 bar, angelegt wird.

24. Verfahren nach Anspruch 21, 22 oder 23, **dadurch gekennzeichnet, daß** ein Unterdruck während eines Zeitraums von weniger als 25- s, insbesondere 15 s, angelegt wird.

25. Verfahren nach einem der Ansprüche 21 bis 24, **dadurch gekennzeichnet, daß** ein Differenz- bzw. Unterdruck über entlang des Umfangs des Kerns (2) zwischen den Folien (6, 7) während des Klemmens bzw. Abdichtens angeordnete, rohr- bzw. schlitzartige, hohle Vorrichtungen (13) angelegt wird, welche zur Ausbildung von teilweise überlappenden Randbereichen im Bereich der Verbindung (9) der Folien (6, 7) unmittelbar vor Beendigung des Evakuierungsschritts zunehmend aus dem Bereich der Verbindung (9) zwischen den zwei Folien (6, 7) entfernt werden.

26. Verfahren nach einem der Ansprüche 21 bis 25, **dadurch gekennzeichnet, daß** während des Evakuierens die Folien (6, 7) zusätzlich erwärmt bzw. erhitzt werden.

## Claims

1. A plate-shaped element for supporting or carrying an object, including a core (2) of foamed plastic having a generally rectangular shape, said core (2) being, in particular holohedrally, covered with a plastic sheet or film (6, 7) of high-impact material at least on its two surfaces (3, 4), wherein a connection (9) of the plastic sheets or films (6, 7) covering the core (2) on its two surfaces (3, 4) is formed in the region of a peripheral side edge (8, 25) of the core (2) between a surface (3, 4) of the core (2) and an adjoining peripheral border (5) of the core (2), **characterized in that** the core (2) is designed with a peripheral, recessed depression (12) in the region of the side edge (8, 25) of the connection (9) between the two plastic sheets (6, 7) covering the surfaces.

2. A plate-shaped element according to claim 1, **characterized in that** the plastic sheets (6, 7) are arranged and/or connected in an at least partially overlapping manner in the region of their connection (9).

3. A plate-shaped element according to claim 1 or 2, **characterized in that** the core (2) is made of foamed polystyrene, EPE, EPP and/or alloys or copolymers thereof.

4. A plate-shaped element according to claim 1, 2 or 3, **characterized in that** the sheet (6, 7) is made of polystyrene, polyethylene and/or mixtures of polystyrene and polyethylene.

5. A plate-shaped element according to claim 4, **characterized in that** a mixture of polystyrene and polyethylene for the sheet (6, 7) contains a maximum of 30% of polyethylene.

6. A plate-shaped element according to claim 4 or 5, **characterized in that** the sheet (6, 7) has a glass transition temperature of from 80 to 160°C.

7. A plate-shaped element according to claim 4, 5 or 6, **characterized in that** the sheet (6, 7) is a multi-layer and, in particular, co-extruded sheet of polystyrene and/or various polystyrene alloys such as, e.g., butadiene or polyethylene.

8. A plate-shaped element according to any one of claims 1 to 7, **characterized in that** the sheet (6, 7) has a thickness of from 0.3 to 4 mm, in particular 1 to 2.5 mm

9. A plate-shaped element according to any one of claims 1 to 8, **characterized in that** both the core (2) and the sheet (6, 7) are made of polystyrene.

10. A plate-shaped element according to any one of claims 1 to 9, **characterized in that** the plate-shaped element (1) has a dynamic load strength of at least 1000 kg.

11. A plate-shaped element according to any one of claims 1 to 10, **characterized in that** the plate-shaped element (1) has a density of from 12 g/L to 90 g/L, in particular 25 g/L to 70 g/L.

12. A plate-shaped element according to any one of claims 1 to 11, **characterized in that** the plate-shaped element (1) comprises a plurality of projecting support elements (10), in particular feet, on one of its surfaces.

13. A plate-shaped element according to claim 12, **characterized in that** a plurality of feet (10) are arranged in a substantially parallel manner.

14. A plate-shaped element according to claim 12 or 13, **characterized in that** a plurality of feet (10) extend substantially over a total dimension and each substantially in parallel with a border (5) of the surface (3, 4).

15. A plate-shaped element according to claim 12, 13 or 14, **characterized in that** the feet (10) are designed with recessed or depressed regions (19) on their facing-away surfaces connected with the surface (4).

16. A plate-shaped element according to any one of claims 12 to 15, **characterized in that** a plurality of feet (10) are arranged in relatively perpendicular lines and columns in a manner known per se.

17. A plate-shaped element according to any one of claims 12 to 16, **characterized in that** the feet (10) are likewise covered or sheathed by a plastic sheet (7), and that the connection with the plastic sheet (6) covering the core (2) is provided in the region of the side edge (8, 25) located on the surface (4) comprising the adjoining feet (10).

18. A plate-shaped element according to any one of claims 12 to 17, **characterized in that** the core (2), on its surface (3) facing away from the feet (10), is formed with at least one depression or recess (18) adapted to the object to be supported.

19. A plate-shaped element according to any one of claims 1 to 18, **characterized in that** the core (2) is formed with guiding grooves or recesses (20), in particular for receiving fixing elements.

20. A plate-shaped element according to any one of claims 1 to 19, **characterized in that** the sheet(s) (6, 7) is/are formed with different thickness(es) and/or several layers in subregions (14).

21. A method for producing a plate-shaped element (1) for supporting or carrying an object, including a core (2) of foamed plastic having a generally rectangular shape, said core (2) being, in particular holohedrally, covered with a plastic sheet or film (6, 7) of high-impact material at least on its two surfaces (3, 4), comprising the steps:
- providing two heated or softened plastic sheets or films (6, 7) covering the surface (3, 4) of the core (2) and whose dimensions exceed the dimensions of the surface (3, 4) of the core (2) ;
- clamping or sealing the peripheral borders of the sheets (6, 7) outside the core (2);
- connecting the plastic sheets (6, 7) in the region of a peripheral side edge (8, 25) of the core between a surface (3, 4) of the core (2) and an adjoining peripheral border (5) of the core (2);
- optionally removing sheet portions projecting beyond the connection site (9) on the periphery of the core;
**characterized by** the additional step:
- evacuating the hollow space (22) formed between the plastic sheets (6, 7) by applying a vacuum source before connecting the plastic sheets (6, 7).

22. A method according to claim 21, **characterized in that** heating of the sheets (6, 7) is effected to a temperature ranging between 90°C and 190°C, in particular 100°C and 160°C.

23. A method according to claim 21 or 22, **characterized in that** a vacuum of from 0.5 to 0.9 bar, in particular 0.7 to 0.8 bar, is applied.

24. A method according to claim 21, 22 or 23, **characterized in that** a vacuum is applied for a period of less than 25 s, in particular 15 s.

25. A method according to any one of claims 21 to 24, **characterized in that** a differential pressure or vacuum is applied via tubular or slot-shaped hollow means (13) arranged about the periphery of the core (2) between the sheets (6, 7) during clamping or sealing, said hollow means (13), for the formation of partially overlapping edge areas in the region of the connection (9) of the sheets (6, 7), being progressively removed from the area of connection (9) between the two sheets (6, 7) immediately before terminating the evacuation step.

26. A method according to any one of claims 21 to 25, **characterized in that** the sheets (6, 7) are additionally heated during evacuating.

## Revendications

1. Elément en forme de plaque destiné à l'appui ou au support d'un objet, comprenant un coeur (2) de forme généralement rectangulaire en une matière plastique expansée; le coeur (2) étant recouvert au moins sur les deux surfaces (3, 4), en particulier sur toute la surface, d'une feuille de matière plastique (6, 7) en un matériau résistant aux chocs, un assemblage (9) des feuilles de matière plastique (6, 7), qui recouvrent le coeur (2) sur les deux surfaces (3, 4), étant réalisé dans la zone d'une arête latérale périphérique (8, 25) du coeur (2) entre une surface (3, 4) du coeur (2) et un bord périphérique (5) s'y raccordant du coeur (2), **caractérisé en ce que** le coeur (2) est réalisé avec une cavité (12) périphérique en déport, dans la zone de l'arête latérale (8, 25) de l'assemblage (9) entre les deux feuilles de matière plastique (6, 7), qui recouvrent les surfaces.

2. Elément en forme de plaque suivant la revendication 1, **caractérisé en ce que** les feuilles de matière plastique (6, 7) sont disposées et/ou assemblées, au moins en partie en chevauchement, dans la zone de leur assemblage (9).

3. Elément en forme de plaque suivant l'une des revendications 1 et 2, **caractérisé en ce que** le coeur (2) est réalisé en polystyrène expansé, EPE, EPP et/ou alliages ou copolymères de ces derniers.

4. Elément en forme de plaque suivant l'une des revendications 1, 2 et 3, **caractérisé en ce que** la feuille (6, 7) est formée de polystyrène, de polyéthylène et/ou de mélanges de polystyrène et de polyéthylène.

5. Elément en forme de plaque suivant la revendication 4, **caractérisé en ce qu'**un mélange de polystyrène et de polyéthylène pour la feuille (6, 7) renferme au maximum 30% de polyéthylène.

6. Elément en forme de plaque suivant l'une des revendications 4 et 5, **caractérisé en ce que** la feuille (6, 7) présente une température de transition vitreuse de 80 à 160° C.

7. Elémént en forme de plaque suivant l'une des revendications 4, 5 et 6, **caractérisé en ce que** la feuille (6, 7) est une feuille multicouche, en particulier coextrudée, de polystyrène et/ou de différents alliages de polystyrène, par exemple avec du butadiène ou du polyéthylène.

8. Elément en forme de plaque suivant l'une des revendications 1 à 7, **caractérisé en ce que** la feuille (6, 7) présente une épaisseur de 0,3 à 4 mm, en particulier de 1 à 2,5 mm.

9. Elément en forme de plaque suivant l'une des revendications 1 à 8, **caractérisé en ce qu'**aussi bien le coeur (2) que la feuille (6, 7) sont fabriqués en polystyrène.

10. Elément en forme de plaque suivant l'une des revendications 1 à 9, **caractérisé en ce que** l'élément en forme de plaque (1) présente une résistance en charge dynamique d'au moins 1000 kg.

11. Elément en forme de plaque suivant l'une des revendications 1 à 10, **caractérisé en ce que** l'élément en forme de plaque (1) présente une masse volumique de 12 g/l à 90 g/l, en particulier de 25 g/l à 70 g/l.

12. Elément en forme de plaque suivant l'une des revendications 1 à 11, **caractérisé en ce que** l'élément en forme de plaque (1) présente sur une surface une pluralité d'éléments d'appui (10) en saillie, en particulier de pieds.

13. Elément en forme de plaque suivant la revendication 12, **caractérisé en ce qu'**une pluralité de pieds (10) a une disposition mutuelle essentiellement parallèle.

14. Elément en forme de plaque suivant l'une des revendications 12 et 13, **caractérisé en ce qu'**une pluralité de pieds (10) s'étend essentiellement sur une dimension totale et de façon essentiellement parallèle à chacun des bords (5) de la surface (3, 4).

15. Elément en forme de plaque suivant l'une des revendications 12, 13 et 14, **caractérisé en ce que** les pieds (10) sont réalisés, sur leurs surfaces opposées à la surface (4) et assemblées avec cette dernière, avec des zones creusées ou évidées (19).

16. Elément en forme de plaque suivant l'une des revendications 12 à 15, **caractérisé en ce qu'**une pluralité de pieds (10) est disposée, de manière connue en soi, en lignes et colonnes perpendiculaires entre elles.

17. Elément en forme de plaque suivant l'une des revendications 12 à 16, **caractérisé en ce que** les pieds (10) sont également recouverts ou gainés d'une feuille de matière plastique (7), et que l'assemblage de la feuille de matière plastique (6), qui recouvre le coeur (2), est prévu dans la zone de l'arête latérale (8, 25), qui se situe sur la surface (4) présentant les pieds (10) en raccordement.

18. Elément en forme de plaque suivant l'une des revendications 12 à 17, **caractérisé en ce que** le coeur (2) est réalisé, sur la surface (3) opposée aux pieds (10), avec au moins une cavité ou creux (18) adaptés à l'objet à supporter.

19. Elément en forme de plaque suivant l'une des revendications 1 à 18, **caractérisé en ce que** le coeur (2) est réalisé avec des rainures ou creux de guidage (20), en particulier pour recevoir des éléments de fixation.

20. Elément en forme de plaque suivant l'une des revendications 1 à 19, **caractérisé en ce que** la (les) feuille(s) (6, 7) est ou sont réalisée(s) dans des zones partielles (14) avec une épaisseur différente et/ou en plusieurs couches.

21. Procédé de fabrication d'un élément en forme de plaque (1) destiné à l'appui ou au support d'un objet, comprenant un corps (2) de forme généralement rectangulaire en une matière plastique expansée, le coeur (2) étant recouvert au moins sur les deux surfaces (3, 4), en particulier sur toute la surface, d'une feuille de matière plastique (6, 7) en un matériau résistant aux chocs, comprenant les étapes :
- préparation de deux feuilles de matières plastiques (6, 7) réchauffées ou ramollies, qui recouvrent la surface (3, 4) du coeur (2) et dont les dimensions dépassent les dimensions de la surface (3, 4) du coeur (2) ;
- coinçage ou étanchéification des bords périphériques des feuilles (6, 7) à l'extérieur du coeur (2) ;
- assemblage des feuilles de matière plastique (6, 7) dans la zone d'une arête latérale périphérique (8, 25) du coeur entre une surface (3, 4) du coeur (2) et un bord périphérique (5), s'y raccordant, du coeur ;
- retrait éventuel de zones partielles des feuilles de matière plastique (6, 7), dépassant de l'endroit d'assemblage (9), sur le pourtour du coeur,
**caractérisé par** l'étape supplémentaire :
- évacuation de l'air de l'espace creux (22), formé entre les feuilles de matière plastique (6, 7), par application d'une source de dépression avant un assemblage des feuilles de matière plastique (6, 7).

22. Procédé suivant la revendication 21, **caractérisé en ce que** les feuilles (6, 7) sont réchauffées à une température comprise entre 90°C et 190°C, en particulier 100 et 160°C.

23. Procédé suivant l'une des revendications 21 et 22, **caractérisé par** l'application d'une dépression de 0,5 à 0,9 bar, en particulier de 0,7 à 0,8 bar.

24. Procédé suivant l'une des revendications 21, 22 et 23, **caractérisé par** l'application d'une dépression pendant une période de moins de 25 s, en particulier de 15 s.

25. Procédé suivant l'une des revendications 21 à 24, **caractérisé en ce qu'**une pression différentielle ou dépression est appliquée par l'intermédiaire de dispositifs creux (13) tubulaires ou en forme de fentes, disposés le long du pourtour du coeur (2) entre les feuilles (6, 7) pendant le coinçage ou l'étanchéification, lesquels dispositifs sont retirés de plus en plus, immédiatement avant la fin de l'étape d'évacuation d'air, de la zone de l'assemblage (9) entre les deux feuilles (6, 7) pour réaliser des zones de bordure en chevauchement partiel dans la zone de l'assemblage (9) des feuilles (6, 7).

26. Procédé suivant l'une des revendications 21 à 25, **caractérisé en ce que** les feuilles (6, 7) sont réchauffées ou chauffées en supplément pendant l'évacuation d'air.
